# EUROPÄISCHE PATENTANMELDUNG

(11) **EP 0 765 091 A2**
(43) Veröffentlichungstag der Anmeldung: **26.03.1997**
(21) Anmeldenummer: 96114789.9
(22) Anmeldetag: 16.09.1996
(51) Int. Cl.: H04Q 1/14

(54) **Module Mehrfach-Anschlussleiste für Kabelanschlüsse eines Haptverteilers von Fernsprech- und Datenleitungen**

(30) Priorität: 21.09.1995 CH 2668/95
(71) Anmelder: Reichle + De-Massari AG Elektro-Ingenieure, 8620 Wetzikon (CH)
(72) Erfinder: Reichle, Hans, 8620 Wetzikon (CH)
(74) Vertreter: Petschner, Goetz

(57) **Zusammenfassung**

Die module Mehrfach-Anschlussleiste für Kabelanschlüsse, insbesondere eines Hauptverteilers von Fernsprech- und Datenleitungen, ist so ausgestaltet, dass die aneinanderliegend in einem Gestell montierbaren Anschlussleisten (1,2) für die Adern (3) sowohl des Linienkabels (3') als auch des Systemkabels (3'') je innerhalb eines Flachgehäuses eine Mehrzahl modular beabstandete, sich von einer Längsschmalseite des Gehäuses zur anderen erstreckende Kontaktfedern (4) mit einem Klemm-Schneid-Kontaktbereich (5) zum lötfreien Anschluss der Adern (3) aufweisen, wobei die freien Enden der Kontaktfedern der direkten Kontaktierung mit den Kontaktfedern von aufsteckbaren Verbindungssteckern (6) und/oder Rangiersteckern (7) und/oder von einer aufsteckbaren Überspannungsschutzkassette (8) dienen.

Hierdurch wird eine neue Generation von Verteileranlagen möglich, bei welchen das Prinzip von Verteilerleisten mit Steckeranschlüssen völlig aufgegeben und eine erhebliche Vereinfachung in der Kontaktierung sowie eine weitere Reduktion des Bauvolumens erreicht wird, indem anstelle der bisherigen Stecker an den Linien- und Systemkabeln nunmehr direkt als Verteilerelemente ausgebildete Anschlussleisten angeschlossen werden.

## Beschreibung

Die vorliegende Erfindung betrifft eine module Mehrfach-Anschlussleiste für Kabelanschlüsse, insbesondere eines Hauptverteilers von Fernsprech- und Datenleitungen.

Bei bekannten Hauptverteilern sind die modulen Mehrfach-Anschlussleisten sowohl für die Adern des Teilnehmernetzkabels als auch für die Adern des Systemkabels der Vermittlungsstelle als Stecker ausgebildet, welche auf Verteilerleisten gesteckt und dort über Kontaktelemente angeschlossen werden, wobei die Kontaktanordnungen der Verteilerleisten Aufschaltkontakte und Trennstellen zur Aufnahme von Trennstecker, Prüfstecker und Rangierstecker bilden.

Eine solche Verteilereinrichtung ist durch die DE-Patentschrift 43 06 349 bekannt geworden, wobei man dort versucht hat, die bisher üblichen, raumbeanspruchenden zwei Arbeitsseiten, nämlich die Anschaltseite und die Manipulierseite einer solchen Einrichtung auf eine Seite des Verteilergestells zu legen. Dies hat man dadurch erreicht, dass die Stecker der Teilnehmernetzkabel (Linienkabel) und der Systemkabel (Zentralen-Kabel) rückseitig auf die Verteilerleisten aufgesteckt und dort auf ein relativ kompliziertes Kontaktsystem aufgeschaltet werden, welches gestattet, frontseitig der Verteilerleisten Rangierstecker, Trennstecker und Überspannungsschutz aufzustecken. Eine solche Anordnung ist sehr aufwendig.

Aufgabe der vorliegenden Erfindung ist nun, eine module Mehrfach-Anschlussleiste für Kabelanschlüsse, insbesondere eines Hauptverteilers von Fernsprech- und Datenleitungen der vorgenannten Art zu schaffen, die einen wesentlich vereinfachten Aufbau eines Hauptverteilers gestattet.

Dies wird erfindungsgemäss zunächst dadurch erreicht, dass die Anschlussleisten für die Adern sowohl des Linienkabels als auch des Systemkabels je eine Mehrzahl modular beabstandete Kontaktanordnungen aufweisen, welche mit Kontaktanordnungen aufsteckbarer Schalt- und/oder Steckermittel direktverbindende Aufschalt- und/oder Trennkontakte bilden.

Hierbei können die aneinanderliegend in einem Gestell montierbaren Anschlussleisten für die Adern sowohl des Linienkabels als auch des Systemkabels je innerhalb eines Flachgehäuses eine Mehrzahl modular beabstandete, sich von einer Längsschmalseite des Gehäuses zur anderen erstreckende Kontaktfedern mit einem Klemm-Schneid-Kontaktbereich zum lötfreien Anschluss der Adern aufweisen, wobei die freien Enden der Kontaktfedern der direkten Kontaktierung mit den Kontakten von aufsteckbaren Verbindungssteckern und/oder Rangiersteckern und/oder von einer aufsteckbaren Überspannungsschutzkassette dienen.

Durch diese Massnahmen wird eine neue Generation von Verteileranlagen möglich, bei welchen das Prinzip von Verteilerleisten mit Steckeranschlüssen völlig aufgegeben und eine erhebliche Vereinfachung in der Kontaktierung sowie eine weitere Reduktion des Bauvolumens erreicht wird, indem anstelle der bisherigen Stecker an den Linien- und Systemkabeln nunmehr direkt als Verteilerelemente ausgebildete Anschlussleisten angeschlossen werden, wobei auch hier eine Vorkonfektion mindestens des Systemkabels durchführbar ist.

Um beliebige Ersatz- und Rückverbinderschaltungen, etwa vom neuen System zum alten Hauptverteiler, vornehmen zu können, besteht eine vorteilhafte Ausgestaltung der Erfindung darin, dass die Anschlussleisten längsschmalseitig aufeinandersteckbar sind, wobei sich die freien Enden der Kontaktfedern beider zusammengesteckter Anschlussleisten kontaktieren. Hierbei bleiben die Funktionen, wie Überspannungsschutz, Prüf-, Trenn- und Rangiermöglichkeit voll erhalten.

Ein Durchschalten der Zentralen- und der Linienseite ist dadurch auf einfachste Weise möglich, indem fluchtende freie Enden von Kontaktfedern von paarweise einander zugeordneten Anschlussleisten für ein Linienkabel resp. Systemkabel vom bügelförmigen Kontakt des Verbindungssteckers direkt verbindbar sind, wobei die so gebildeten Trennkontakte mittels Prüfstecker o. dgl. trennbar sind.

Hierbei wird ein sicheres Schalten und Prüfen dadurch erreicht, dass im Bereich der freien Enden der Kontaktfedern parallele Führungen für die Schalt- und Steckermittel angeordnet sind zur gleichzeitigen Kontaktierung mittels Verbindungsstecker oder Rangierstecker und Prüfstecker.

Beispielsweise Ausführungsformen des Erfindungsgegenstandes sind nachfolgend anhand der Zeichnungen näher erläutert. Es zeigen:
- Fig. 1: in schaubildartiger Darstellung eine mit den erfindungsgemässen Anschlussleisten aufgebaute Verteileranlage zum Aufschalten von Linienkabel und Systemkabel; und
- Fig. 2: in schaubildartiger Darstellung eine Ausführungsvariante der Anordnung gemäss Fig 1 mit Rückverbindungsschaltung zum alten Verteiler.

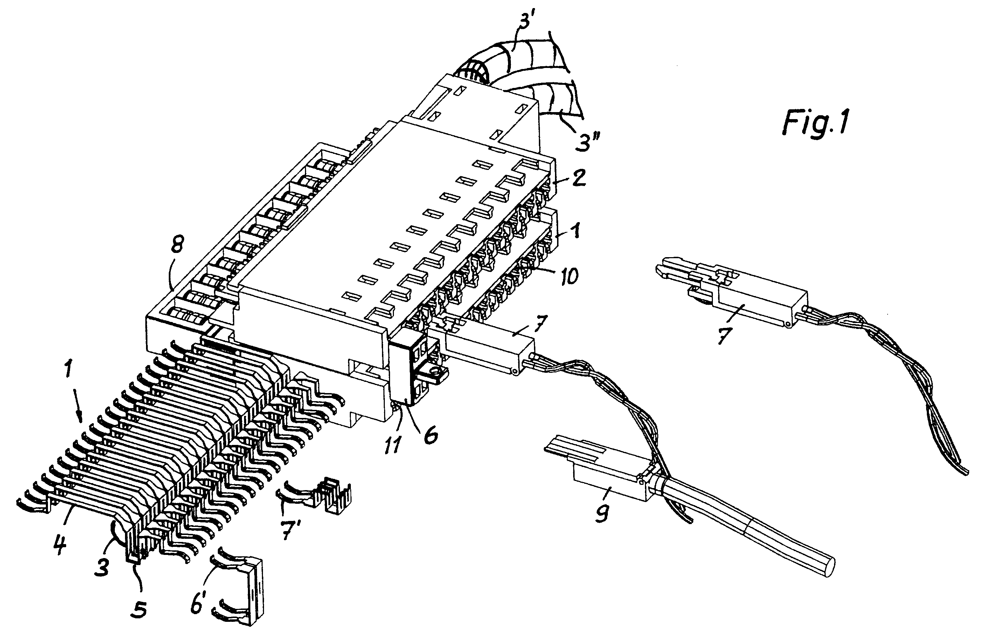

Die die aneinanderliegend in einem Gestell (nicht gezeigt) montierbaren modulen Mehrfach-Anschlussleisten 1 und 2, für die Adern 3 sowohl des Linienkabels 3' als auch des Systemkabels 3'' weisen je innerhalb eines Flachgehäuses eine Mehrzahl modular beabstandete, sich von einer Längsschmalseite des Gehäuses zur anderen erstreckende Kontaktfedern 4 mit einem Klemm-Schneid-Kontaktbereich 5 zum lötfreien Anschluss der Adern 3 auf, wie dies aus dem ohne Gehäuse gezeigten Teil einer Anschlussleiste 1 in Fig. 1 deutlich wird.

Hierbei dienen die freien Enden der Kontaktfedern der direkten Kontaktierung mit den Kontaktfedern 6' von aufsteckbaren Verbindungssteckern 6 und/oder mit den Kontaktfedern 7' von Rangiersteckern 7 und/oder von einer aufsteckbaren Überspannungsschutzkassette 8.

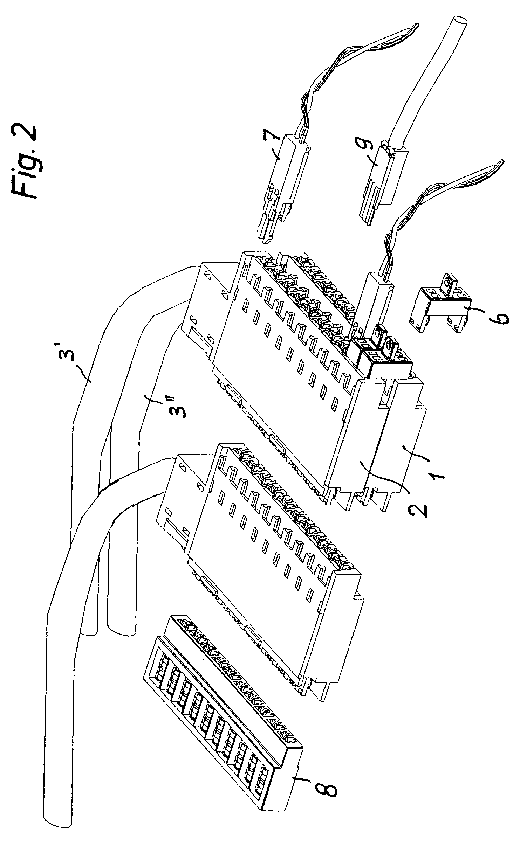

Um beliebige Ersatz- und Rückverbinderschaltungen, etwa vom neuen System zum alten Hauptverteiler, vornehmen zu können, sind gemäss Fig. 2 die Anschlussleisten längsschmalseitig aufeinandersteckbar, wobei sich die freien Enden der Kontaktfedern beider zusammengesteckter Anschlussleisten kontaktieren. Hierbei bleiben die Funktionen, wie Überspannungsschutz, Prüf-, Trenn- und Rangiermöglichkeit gemäss der Anordnung nach Fig. 1 voll erhalten.

Ein Durchschalten der Zentralen- und der Linienseite ist dadurch auf einfachste Weise möglich, indem fluchtende freie Enden von Kontaktfedern von paarweise einander zugeordneten Anschlussleisten 1 und 2 für ein Linienkabel 1 resp. Systemkabel 2 vom bügelförmigen Kontakt 6' des Verbindungssteckers 6 direkt verbindbar sind, wobei die so gebildeten Trennkontakte mittels Prüfstecker 9 o. dgl. trennbar sind.

Aus diesen vorbeschriebenen Massnahmen ergibt sich nun zunächst der primäre Vorteil, indem das Prinzip von Verteilerleisten mit Steckeranschlüssen völlig aufgegeben und eine erhebliche Vereinfachung in der Kontaktierung sowie eine weitere Reduktion des Bauvolumens erreicht wird, indem anstelle der bisherigen Stecker an den Linien- und Systemkabeln nunmehr direkt als Verteilerelemente ausgebildete Anschlussleisten angeschlossen werden.Hierbei ist es von Vorteil, wenn im Bereich der freien Enden der Kontaktfedern 4 parallele Führungen 10, 11 für die Schalt- und Steckermittel angeordnet sind zur gleichzeitigen Kontaktierung mittels Verbindungsstecker 6 oder Rangierstecker 7 und Prüfstecker 9. Damit wird ein Prüfen unabhängig der geschalteten Verbindung möglich. Weiter können die Anschlussleisten als reine Rangierverteiler sowie als Kartenstecker eingesetzt werden. Zudem können Leiterplatten u. dgl. aufgesteckt werden zur Herstellung von Parallelschaltungen u.a. Weiter kann ein von der Überspannungskassette unabhängiger Stromschutz durch Einbau von Stromschutzmitteln in die Gehäuse von Verbindungsstecker und Rangierstecker erreicht werden.

## Patentansprüche

1. Module Mehrfach-Anschlussleiste für Kabelanschlüsse, insbesondere eines Hauptverteilers von Fernsprech- und Datenleitungen,
dadurch gekennzeichnet, dass
die Anschlussleisten (1,2) für die Adern (3) sowohl des Linienkabels (3') als auch des Systemkabels (3'') je eine Mehrzahl modular beabstandete Kontaktanordnungen aufweisen, welche mit Kontaktanordnungen aufsteckbarer Schalt- und/oder Steckermittel direktverbindende Aufschalt- und/oder Trennkontakte bilden.

2. Mehrfach-Anschlussleiste nach Anspruch 1, dadurch gekennzeichnet, dass die aneinanderliegend in einem Gestell montierbaren Anschlussleisten (1,2) für die Adern (3) sowohl des Linienkabels (3') als auch des Systemkabels (3'') je innerhalb eines Flachgehäuses eine Mehrzahl modular beabstandete, sich von einer Längsschmalseite des Gehäuses zur anderen erstreckende Kontaktfedern (4) mit einem Klemm-Schneid-Kontaktbereich (5) zum lötfreien Anschluss der Adern (3) aufweisen, wobei die freien Enden der Kontaktfedern der direkten Kontaktierung mit den Kontaktfedern von aufsteckbaren Verbindungssteckern (6) und/oder Rangiersteckern (7) und/oder von einer aufsteckbaren Überspannungsschutzkassette (8) dienen.

3. Mehrfach-Anschlusseiste nach Anspruch 1, dadurch gekennzeichnet, dass die Anschlussleisten (1,2) längsschmalseitig aufeinandersteckbar sind, wobei sich die freien Enden der Kontaktfedern beider zusammengesteckter Anschlussleisten kontaktieren.

4. Mehrfach-Anschlussleiste nach Anspruch 1, dadurch gekennzeichnet, dass fluchtende freie Enden von Kontaktfedern (4) von paarweise einander zugeordneten Anschluss-Leisten (1,2) für ein Linienkabel (3') resp. Systemkabel (3'') vom bügelförmigen Kontakt (6') des Verbindungssteckers (6) direkt verbindbar sind, wobei die so gebildeten Trennkontakte mittels Prüfstecker (9) o. dgl. trennbar sind.

5. Mehrfach-Anschlussleiste nach den Ansprüchen 1 bis 4, dadurch gekennzeichnet, dass im Bereich der freien Enden der Kontaktfedern (4) parallele Führungen (10,11) für die Schalt- und Steckermittel angeordnet sind zur gleichzeitigen Kontaktierung mittels Verbindungsstecker (6) oder Rangierstecker (7) und Prüfstecker (9).
